# DEMANDE DE BREVET EUROPEEN

(11) **EP 2 960 700 A1**
(43) Date de publication de la demande: **30.12.2015**
(21) Numéro de dépôt: 15174126.1
(22) Date de dépôt: 26.06.2015
(51) Int. Cl.: G02B 7/183, G02B 5/10, G02B 23/00

(54) **PROCEDE DE FABRICATION D'UN MIROIR**

(30) Priorité: 27.06.2014 FR 1401452
(71) Demandeur: THALES, 92400 Courbevoie (FR)
(72) Inventeur: FALZON, Frédéric, 06156 CANNES LA BOCCA Cedex (FR); DEVILLIERS, Christophe, 06156 CANNES LA BOCCA Cedex (FR); LABORDE, Cyrille, 06156 CANNES LA BOCCA Cedex (FR)
(74) Mandataire: Brunelli, Gérald

(57) **Abrégé**

L'invention concerne un procédé d'élaboration d'un miroir (1) comprenant une pluralité de surfaces optiques, le procédé comprend :
- une étape d'élaboration d'éléments (2),
- Une étape d'assemblage par l'arrière des éléments entre eux,
- une étape de fixation par l'arrière des éléments (2) sur une structure porteuse (3) du miroir (1), et une étape de polissage ultérieure à l'étape de fixation des éléments (2) pour obtenir les surfaces optiques du miroir et corriger les défauts résiduels de positionnement des surfaces optiques et les polir.

## Description

Le domaine de l'invention concerne les surfaces optiques pour l'observation spatiale, et, plus précisément, une méthode de fabrication des surfaces optiques.

L'invention est particulièrement appropriée pour des miroirs de grandes dimensions, typiquement la plus grande dimension est supérieure à 1,5 m.

Aujourd'hui, les miroirs de grandes dimensions sont réalisés soit par assemblage d'une pluralité de surfaces optiques de petites dimensions, soit par réalisation globale d'un grand miroir monolithique.

Les miroirs réalisés par assemblage d'une pluralité de surfaces optiques de petites dimensions nécessitent d'être associés à un système actif permettant de déplacer les surfaces optiques les unes par rapport aux autres pour optimiser l'alignement des surfaces optiques.

Une deuxième solution consiste à fabriquer un miroir par assemblage de surfaces optiques de plus petites dimensions qui seront ensuite polies. Dans ce cas, les zones d'assemblage des surfaces optiques (assemblage par collage, brasage, soudure etc..) font partie du miroir et doivent donc être aussi stables que les surfaces optiques du miroir.

Une troisième solution consiste à réaliser un miroir monolithique. Ce type de procédé nécessite des moyens de production de tailles suffisantes pour réaliser la structure du miroir. La réalisation de miroir par cette méthode est onéreuse voire impossible pour des miroirs de très grandes dimensions.

L'invention propose une solution permettant de pallier les inconvénients cités en proposant notamment un assemblage par l'arrière des surfaces optiques constitutives du miroir via une structure porteuse faite d'un matériau de stabilité thermo-élastique équivalente à celle des surfaces optiques du miroir. Ainsi, l'assemblage n'est pas réalisé du côté poli du miroir.

Selon un aspect de l'invention, il est proposé un procédé d'élaboration d'un miroir comprenant une pluralité de surfaces optiques, le procédé comprend :
- une étape d'élaboration d'éléments,
- une étape d'assemblage par l'arrière des éléments entre eux,
- une étape de fixation par l'arrière des éléments sur une structure porteuse du miroir, et
- une étape de polissage des éléments ultérieure à l'étape de fixation des éléments sur la structure porteuse et d'assemblage des éléments entre eux pour obtenir les surfaces optiques et corriger les défauts résiduels de positionnement des surfaces optiques.

Avantageusement, la différence de coefficient de dilatation thermique entre les éléments et la structure porteuse étant inférieure à une valeur seuil, la valeur seuil est de 5 µm/m/K. Alternativement, les éléments et la structure porteuse comprennent des matériaux possédant des caractéristiques thermo-élastiques identiques.

Avantageusement, les éléments comprennent du Zerodur (marque déposée) ou du Si₃N₄ (nitrure de silicium) ou du SiC (Carbure de Silicium) ou tout autre matériau compatible avec les applications d'optique spatiale.

L'invention permet d'obtenir des miroirs optiques ultrastables présentant une dilatation thermique très faible, dans la gamme de températures d'utilisation et compatible avec les besoins de l'observation spatiale.

Avantageusement, des moyens de fixation des éléments ont un coefficient de dilatation thermique similaire au coefficient de dilatation thermique du matériau des éléments et de la structure porteuse, en d'autres termes, la différence de coefficient de dilatation thermique entre des moyens de fixation et les éléments étant inférieure à la valeur seuil.

Préférentiellement, les zones d'assemblage ou moyens de fixation des éléments du miroir ne font pas partie de la surface optique polie.

Avantageusement, l'élément est de forme hexagonale, l'assemblage des éléments formant un polygone.

Avantageusement, le miroir comprend une ouverture à l'intérieur du polygone.

L'invention sera mieux comprise à l'étude de quelques modes de réalisation décrits à titre d'exemples nullement limitatifs, et illustrés par des dessins annexés sur lesquels :
- la figure 1 présente une vue de la face arrière d'un miroir obtenu par le procédé décrit selon l'invention,
- la figure 2 présente une vue de la face avant du miroir, et
- la figure 3 représente un schéma de principe du procédé selon l'invention.

L'invention propose un procédé particulièrement bien adapté pour la réalisation de miroirs de grande dimension, et notamment des miroirs dont la plus grande dimension est supérieure à 1,5 m. Eventuellement, les miroirs selon l'invention peuvent être associés à un système actif de positionnement des surfaces optiques.

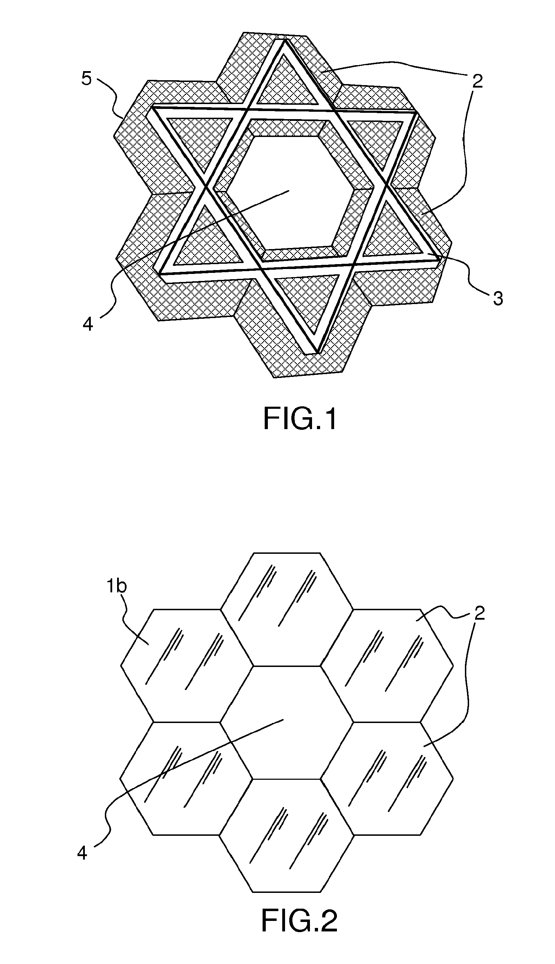

La figure 1 représente un miroir obtenu par le procédé selon l'invention. Le miroir 1 comprend une pluralité d'éléments 2 fixés sur une structure porteuse 3.

Les éléments 2 comprennent un matériau présentant un faible coefficient de dilatation thermique tel que le Zerodur (marque déposée), le nitrure de silicium, le carbure de silicium ou tout autre matériau compatible avec les applications d'optique spatiale. On entend par faible coefficient de dilation thermique des coefficients de dilatation thermique inférieurs à 5 µm/m/K environ, dans la gamme de températures d'utilisation. On entend par éléments, une portion constituant le miroir dont l'une des faces destinée à constituer une partie de la surface optique est non encore polie. Ils peuvent être de géométrie quelconque, en l'espèce les éléments sont de forme hexagonale.

La structure 3 comprend un matériau présentant aussi un faible coefficient de dilatation thermique. Elle peut se présenter sous différentes formes géométriques, par exemple, sous une forme de double triangle croisé, sous une forme circulaire ou sous la forme d'un ensemble de nervures.

Les dilatations thermiques des éléments 2 et de la structure porteuse 3 sont équivalentes. Préférentiellement, les éléments 2 et la structure porteuse 3 comprennent des matériaux identiques.

L'assemblage des éléments 2 présente préférentiellement une géométrie polygonale. Eventuellement, le miroir 1 présente une ouverture 4 au centre permettant de disposer un miroir secondaire en vis-à-vis de l'ouverture 4.

Les éléments 2 sont fixés sur la structure porteuse 2 par collage, brasage, par liaison vissée ou tout autre moyen de fixation 5. Préférentiellement, les moyens de fixation 5 comprennent un matériau dont le coefficient de dilatation thermique est équivalent au coefficient de dilatation thermique des éléments 2.

La figure 2 représente une vue de la surface réfléchissante du miroir réalisé selon un aspect de l'invention.

La face avant des éléments 2 constitue des surfaces optiques après polissage, l'ensemble des surfaces optiques constituant la surface réfléchissante 1b du miroir 1. Les éléments 2 étant fixés par l'arrière, la face réfléchissante 1b du miroir 1 est exempte de moyen de fixation 5. Les éléments 2 ayant été polis après leur fixation sur la structure porteuse 3, la surface réfléchissante 1b est parfaitement lisse pour permettre l'observation spatiale.

Les miroirs ainsi obtenus sont ultra stables thermiquement, les dilatations des éléments 2, de la structure porteuse 3 et des moyens de fixations 5 étant équivalentes. En outre, ce type de miroir 1 ne nécessite pas de système actif pour repositionner les différents éléments du miroir entre eux.

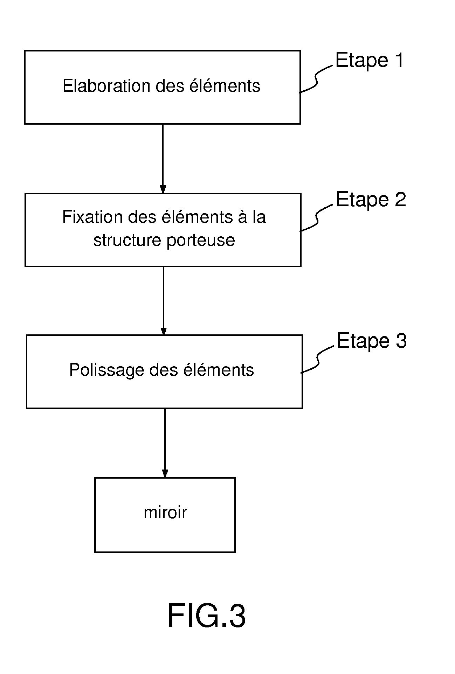

Le principe du procédé dont le synoptique est représenté sur la figure 3 comprend une étape d'élaboration des éléments 2, une étape d'assemblage par l'arrière des éléments entre eux et une étape de fixation des éléments 2 par l'arrière sur la structure porteuse 3, les éléments étant non polis lors de l'étape d'assemblage entre eux et de fixation sur la structure porteuse 3 , l'étape de polissage étant ultérieure à l'étape d'assemblage et de fixation. Autrement dit, les éléments 1 sont fixés entre eux et à la structure porteuse 3 du côté opposé à la surface réfléchissante 1 b.

Ce procédé présente l'avantage de réaliser des éléments 2 avant de les assembler sur la structure porteuse 3. Les traitements thermiques auxquels les éléments 2 sont soumis peuvent être réalisés dans un four traditionnellement utilisé à cet effet et ne nécessite pas d'investissement particulier. Ce procédé permet par ailleurs de réaliser un miroir 1 quelle que soit ses dimensions.

En outre, l'étape de polissage étant réalisée après l'assemblage des éléments 2, la surface réfléchissante 1 b est parfaitement lisse et compatible avec les performances requises pour l'observation spatiale.

## Revendications

1. Procédé d'élaboration d'un miroir (1) comprenant une pluralité de surfaces optiques, le procédé comprend :
- une étape d'élaboration d'éléments (2),
- une étape d'assemblage par l'arrière des éléments entre eux,
- une étape de fixation des éléments (2) par l'arrière sur une structure porteuse (3) du miroir (1), et
- une étape de polissage ultérieure à l'étape de fixation des éléments sur la structure porteuse et d'assemblage des éléments (2) entre eux pour obtenir les surfaces optiques du miroir (1) et corriger les défauts résiduels de positionnement des surfaces optiques.

2. Procédé selon la revendication 1 dans lequel la différence de coefficient de dilatation thermique entre les éléments (2) et la structure porteuse (3) étant inférieure à une valeur seuil.

3. Procédé selon la revendication 2 dans lequel la valeur seuil est de 5 µm/m/K.

4. Procédé selon la revendication 1 dans lequel les éléments (2) et la structure porteuse (3) comprennent des matériaux possédant des caractéristiques thermo élastiques identiques.

5. Procédé selon l'une des revendications précédentes dans lequel des moyens de fixation (5) des éléments (2) sur la structure porteuse (3) ont un coefficient de dilatation thermique similaire au coefficient de dilatation thermique du matériau des éléments (2) et de la structure porteuse (3).

6. Procédé selon l'une des revendications précédentes dans lequel les éléments (2) comprennent du Zerodur (marque déposée), du Si₃N₄ (nitrure de silicium) ou du SiC (Carbure de Silicium) ou tout autre matériau compatible avec les applications d'optique spatiale.

7. Procédé selon l'une des revendications précédentes dans lequel l'élément (2) est de forme hexagonale, l'assemblage des éléments (2) formant un polygone.

8. Procédé selon la revendication 7 dans lequel le miroir comprend une ouverture (4) à l'intérieur du polygone.
